# EUROPEAN PATENT SPECIFICATION

(11) **EP 2 574 534 B1**
(45) Date of publication and mention of the grant of the patent: **10.05.2017**
(21) Application number: 12185587.8
(22) Date of filing: 24.09.2012
(51) Int. Cl.: B62K 19/46, B62K 19/30, B62K 11/04, B62J 7/04

(54) **Saddle type vehicle**
Sattelfahrzeug
Véhicule de type à enfourcher

(30) Priority: 29.09.2011 JP 2011215190
(43) Date of publication of application: 03.04.2013
(73) Proprietor: Honda Motor Co., Ltd., Tokyo 107-8556 (JP)
(72) Inventor: Hirano, Kohei, Saitama, 351-0193 (JP); Haramoto, Takayuki, Saitama, 351-0193 (JP); Saito, Shinobu, Saitama, 351-0193 (JP); Ishida, Noriyuki, Saitama, 351-0193 (JP)
(74) Representative: Ilgart, Jean-Christophe

(56) References cited:
- CN-U- 201 951 601
- CN-Y- 201 086 768
- JP-A- H06 316 282
- JP-A- 2004 182 108
- JP-A- 2008 285 065
- JP-B2- 3 007 666

## Description

### [Technical Field]

The present invention relates to a saddle type vehicle including a pair of left and right seat rails which constitute a part of a body frame and by which a tandem type rider seat is supported, a pair of left and right passenger grips which are attached to the left and right seat rails independently on the left and right sides so as to be gripped by a pillion passenger seated on a rear portion of the rider seat, and a carrier disposed rearwardly of the rider seat so as to load luggage thereon.

### [Background Art]

A motorcycle wherein an extension rail spanning a space between a pair of left and right seat rails is provided and a carrier disposed rearwardly of the rider seat is attached to the extension rail has been known, as disclosed in Patent Document 1.

### [Prior Art Document]

### [Patent Document]

[Patent Document 1]
Japanese Patent Laid-Open No. 2008-285065

### [Summary of the Invention]

### [Problem to be Solved by the Invention]

Meanwhile, in the case where the carrier is attached to the extension rail spanning the space between seat rails as disclosed in Patent Document 1, the seat rails can be reinforced against loads exerted thereon in transverse and torsional directions by a heavy body loaded on the carrier, but the rigidity of the structure may exceed an appropriate rigidity when no luggage is present on the carrier. In addition, although the extension rail can be used as a passenger grip for the pillion passenger by setting an appropriate interval between the rider seat and the extension rail, the extension rail is provided in the vicinity of the seat rails because it is a reinforcement member; consequently, the extension rail is disposed below the upper surface of the rider seat and, therefore, cannot be said to be suitable for use as a passenger grip.

Document JP 2004 182 108 discloses a vehicle considered the closest prior art for claim 1.

The present invention has been made in consideration of the above-mentioned circumstances. Accordingly, it is an object of the present invention to provide a saddle type vehicle having such passenger grips that, when it is unnecessary to load luggage, the weight and rigidity of a vehicle rear portion can be reduced, thereby offering appropriate driving stability, and that the pillion passenger can grip the passenger grips appropriately.

### [Means for Solving the Problem]

In order to attain the above object, a saddle type vehicle is disclosed in accordance with claim 1.

Besides, the saddle type vehicle of the present invention is secondly characterized, in addition to having the configuration according to the first characteristic, in that each of the pair of left and right passenger grips includes a passenger grip base portion which extends in a fore-and-aft direction with its lower end coinciding with a lower end of the rider seat in side view and which is attached to the seat rail, and a grip portion which is provided in continuity with the passenger grip base portion with its upper end coinciding with an upper end of the rider seat in side view in such a manner as to be capable of being gripped by the pillion passenger.

The saddle type vehicle of the present invention is thirdly characterized, in addition to having the configuration according to the first or second characteristic, in that an upper surface of the carrier is disposed on a rearward extension of an upper surface of the rider seat.

The saddle type vehicle of the present invention is fourthly characterized, in addition to having the configuration according to any of the first to third characteristics, in that the carrier is provided with attachment holes for attaching the carrier to the passenger grips, the attachment holes being disposed on vehicle-width-directionally inner sides of the pair of left and right passenger grips, and the attachment holes on each side being located at two positions spaced from each other along the fore-and-aft direction, in such a manner that a forward extension line of a straight line passing through center axes of the attachment holes on each side obliquely intersects a lower end of the rider seat in side view and that a rearward extension line of the straight line obliquely intersects an upper surface of the carrier in side view.

The saddle type vehicle of the present invention is fifthly characterized, in addition to having the configuration according to the second characteristic, in that a hook for engagement with a pannier case is detachably attached to the passenger grip base portion of the passenger grip.

Furthermore, the saddle type vehicle of the present invention is sixthly characterized, in addition to having the configuration according to the fifth characteristic, in that the passenger grip base portion is attached to the seat rail at two positions spaced from each other along the fore-and-aft direction, and the hook is located between the positions at which the passenger grip base portion is attached to the seat rail.

### [Effect of the Invention]

According to the first characteristic of the present invention, in the case where it is unnecessary to load luggage, the carrier can be detached from the passenger grips, which makes it possible to reduce the weight and rigidity of the vehicle rear portion, and to obtain appropriate driving stability. In addition, since the passenger grips to be gripped by the pillion passenger are attached to the seat rails, the pillion passenger can grip the passenger grips appropriately.

In addition, according to the second characteristic of the present invention, each of the passenger grips includes the passenger grip base portion extending in the fore-and-aft direction and attached to the seat rail, and the grip portion provided in continuity with the passenger grip base portion in such a manner as to be capable of being gripped by the pillion passenger. Besides, the lower end of the passenger grip base portion coincides with the lower end of the rider seat in side view, and the upper end of the grip portion coincides with the upper end of the rider seat in side view. Therefore, external appearance quality of the vehicle in side view can be enhanced, and the grip portions can be set at an appropriate height for the pillion passenger to grip.

According to the third characteristic of the present invention, the upper surface of the carrier is disposed on the rearward extension of the upper surface of the rider seat. Therefore, external appearance quality of the vehicle can be enhanced, and luggage can be loaded not only on the carrier but also in the manner of spanning the space between the carrier and the rider seat. Particularly, when the upper ends of the grip portions of the passenger grips coincide with the upper end of the passenger seat in side view, the upper surface of the carrier is disposed on the rearward extension of the upper surface of the rider seat and the upper end of the grip portions of the passenger grips, whereby the external appearance quality in side view. is further enhanced.

According to the fourth characteristic of the present invention, the attachment holes provided in the carrier along the vehicle width direction for attaching the carrier to the passenger grips are disposed on the vehicle-width-directionally inner sides of the pair of left and right passenger grips, the attachment holes on each side being located at two positions spaced from each other along the fore-and-aft direction, in such a manner that the forward extension line of the straight line passing through the center axes of the attachment holes on each side obliquely intersects the lower end of the rider seat in side view and that the rearward extension line of the straight line obliquely intersects the upper surface of the carrier in side view. Therefore, the center of gravity of the luggage loaded on the carrier and each of the portions of the carrier which are attached to the seat rails can be interconnected at a minimum distance.

According to the fifth characteristic of the present invention, the hook for engagement with the pannier case is detachably attached to the passenger grip base portion of the passenger grip. Therefore, the grip portion and the hook are provided on the passenger grip in the manner of being distributed respectively to the upper arid lower sides. This makes it possible to avoid interference between the hand gripping the passenger grip and the pannier case.

Furthermore, according to the sixth characteristic of the present invention, the hook is disposed between the positions at which the passenger grip base portion is attached to the seat rail. This avoid mutual interference between a structure for detachably attaching the hook and a structure for attaching the passenger grip base portion to the seat rail, whereby simplification of the structures can be contrived.

### [Brief Description of the Drawings]

FIG. 1 is a side view of a motorcycle.
FIG. 2 is a perspective view of a front portion of the motorcycle.
FIG. 3 is a sectional view taken along line 3-3 of FIG. 2.
FIG. 4 is a sectional view taken along line 4-4 of FIG. 2.
FIG. 5 is a side view of a rear portion of the motorcycle in a state wherein pannier cases have been detached.
FIG. 6 is a view taken along arrow 6 of FIG. 1.
FIG. 7 is a perspective view of a rear portion of the motorcycle and the pannier case.
FIG. 8 is a partly cut-out vertical sectional front view, as viewed from the rear side, of the pannier case attached to a vehicle body.
FIG. 9 is a sectional view taken along line 9-9 of FIG. 8.

### [Mode for Carrying Out the Invention]

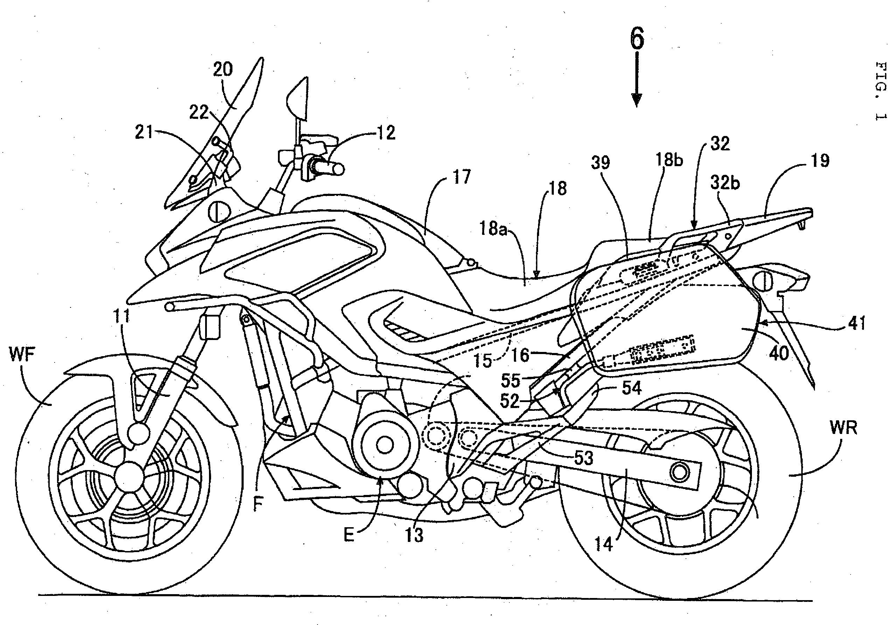

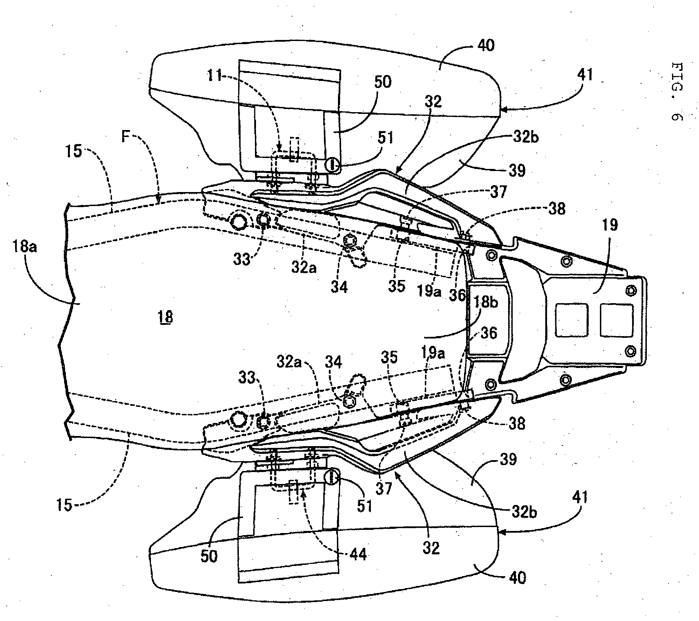

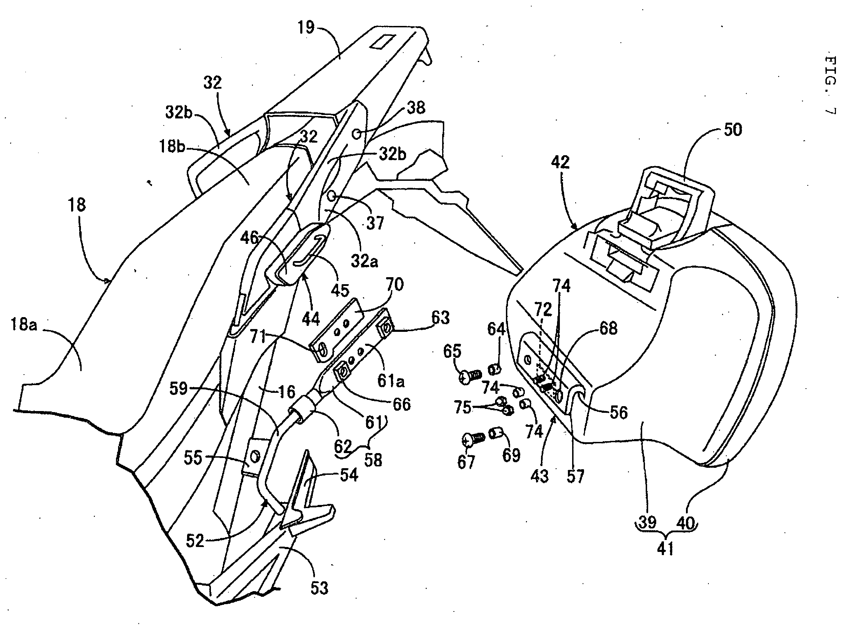

An embodiment of the present invention will be described below referring to the accompanying FIGS. 1 to 9. Incidentally, the forward, rearward, upward, downward, leftward and rightward directions in the following description refer to those directions as viewed from a rider riding on the motorcycle.

First, in FIG. 1, on a front end of a body frame F of a motorcycle as a saddle type vehicle, a front fork 11 with a front wheel WF rotatably supported thereon and a bar-shaped steering handle 12 are steerably supported. A rear wheel WR is rotatably supported on a rear end portion of a swing arm 14, which is vertically swingably supported by a pivot frame 13 constituting a part of the body frame F. An internal combustion engine E disposed between the front wheel WF and the rear wheel WR in such a manner as to produce driving power for driving the rear wheel WR is mounted on the body frame F.

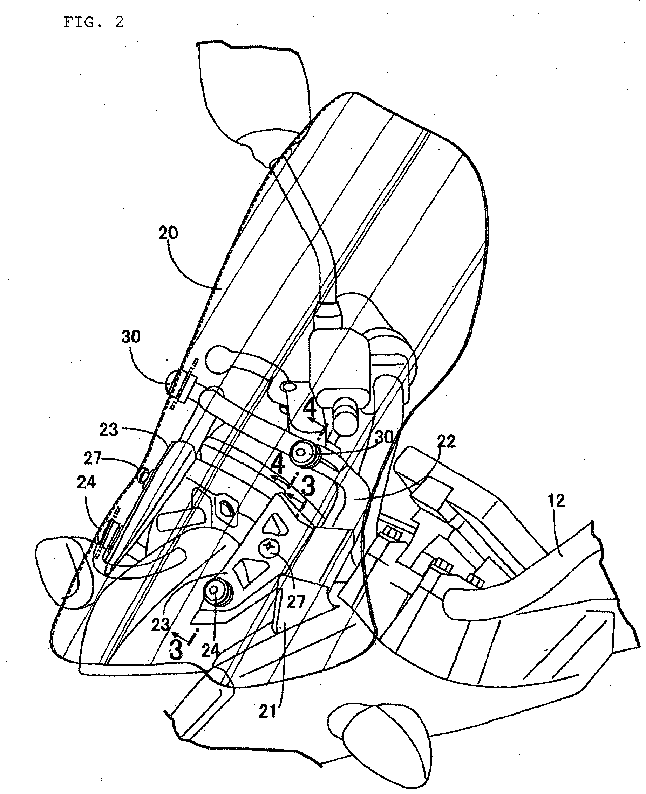

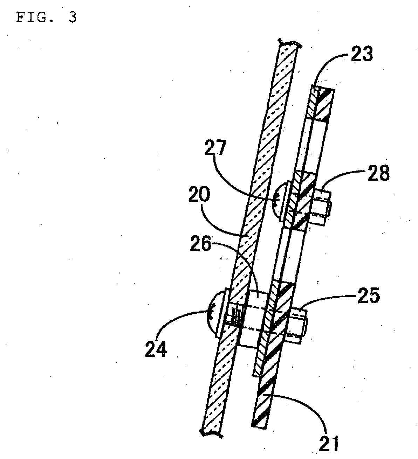

Referring to FIGS. 2 and 3 also, a windscreen 20 is disposed forwardly of the steering handle 12. Lower screen stays 21 ... are respectively disposed rearwardly of left and right lower portions the windscreen 20 in the state of being supported by a front portion of the body frame F. Attachment plates 23 and the windscreen 20, with a hollow cylindrical spacer 26 put between the attachment plate 23 and the windscreen 20, are co-fastened to lower portions of the lower screen stays 21 ... by screw members 24 ... and nuts 25 .... In addition, upper portions of the lower screen stays 21 ... and the attachment plates 23 ... are fastened by bolts 27 ... and nuts 28 ... .

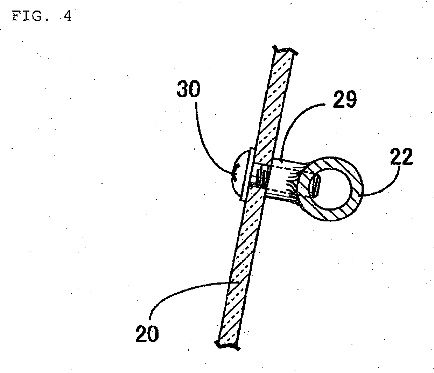

Referring to FIG. 4 as well, an upper screen stay 22 formed by bending a pipe into a roughly U shape opening to the lower side is joined at both ends thereof to the attachment plates 23. Bosses 29 ... are fixed at two parts, spaced from each other in the left-right direction, of the upper screen stay 22, and vertical-directionally intermediate portions of the windscreen 20 are fastened to the bosses 29 ... by screw members 30 ....

Such a support structure for the windscreen 20 ensures that, in fastening left and right portions of the windscreen 20 to the pair of left and right lower screen stays 21 ... and to the upper screen stay 22 (of which both left and right end portions are fastened to the lower screen stays 21 ... ), the fastening should be made at a total of only six locations, namely, three locations on the left side and three locations on the right side. Consequently, a reduction in the number of component parts can be contrived.

As shown in FIG. 1, a fuel tank 17 is mounted on a front portion of the body frame F in such a manner as to be disposed on the upper side of the internal combustion engine E, a rider seat 18 is disposed rearwardly of the fuel tank 17, and a carrier 19 is disposed rearwardly of the rider seat 18.

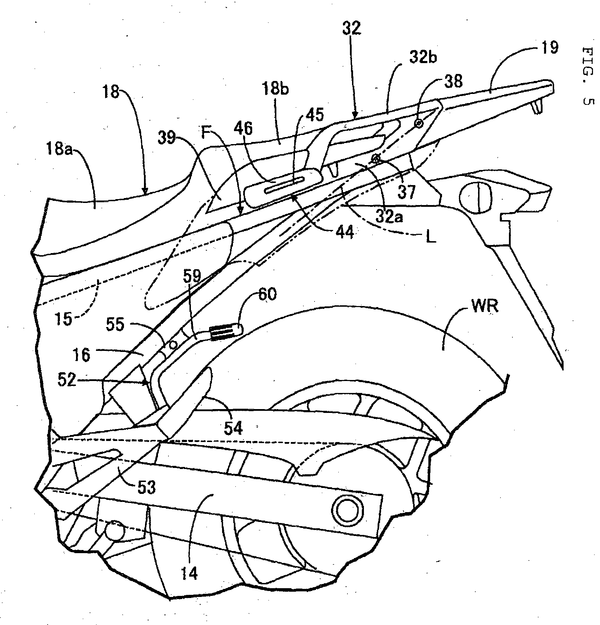

Referring to FIGS. 5 to 7 also, the rider seat 18 is configured as a tandem type seat including a front seat 18a and a rear seat 18b which is disposed rearwardly of the front seat 18a for seating a pillion passenger thereon. The rear set 18b is formed to be above the front seat 18a. The rider seat 18 is supported by a pair of left and right seat rails 15 ... which constitute a part of the body frame F and which are disposed on the upper side of the swing arm 14 and the rear wheel WR. A pair of left and right rear subframes 16 ... extending rearwardly upward are provided between a lower portion of the pivot frame 13 and rear portions of the seat rails 15 ... , in such a manner as to constitute a part of the body frame F.

A pair of left and right passenger grips 32, 32 independent from each other are attached respectively to the left and right seat rails 15 ... so as to be gripped by the pillion passenger seated on the rear seat 18b of the rider seat 18. The carrier 19 is detachably attached to both the passenger grips 32 ... .

The passenger grip 32 integrally has a passenger grip base portion 32a which extends in the fore-and-aft direction and is attached to a rear portion of the seat rail 15, and a grip portion 32b which is connected at both front and rear end portions thereof to a rear portion of the passenger grip base portion 32a so as to be capable of being gripped by the pillion passenger. Two parts, spaced from each other in the fore-and-aft direction, of the passenger grip base portion 32a are attached to the seat rail 15 by bolts 33, 34.

Moreover, the passenger grip 32 is so formed that, when it is attached to the seat rail 15, the lower end of the passenger grip base portion 32a coincides with the lower end of the rider seat 18 in side view, and the upper end of the grip portion 32b coincides with the upper end of the rear seat 18b of the rider seat 18 in side view.

The carrier 19 is provided with two sets of attachment holes 35, 36 (a pair of left and right attachment holes 35 and a pair of left and right attachment holes 36) for attaching the carrier 19 to the left and right passenger grips 32 .... The attachment holes 35, 36 are so located that their center axes are disposed in the vehicle width direction and they are located on the vehicle-width-directionally inner sides of the pair of left and right passenger grips 32 .... In this embodiment, the carrier 19 is provided integrally with a pair of left and right attachment arm portions 19a, 19a so that the attachment arm portions 19a, 19a extend forward on the inner side of the passenger grip base portions 32a ... of the passenger grips 32 .... The attachment arm portions 19a ... are each provided with a pair of front and rear attachment holes 35, 36 ... at two positions spaced from each other along the fore-and-aft direction. The attachment arm portions 19a ... are detachably attached to the passenger grip base portions 32a ... of the pair of left and right passenger grips 32 ... by bolts 37, 38 ... passed through the attachment holes 35, 36 ....

The upper surface of the carrier 19 in the state of being attached to the passenger grips 32 ... is disposed on a rearward extension of the upper surface of the rear seat 18b of the rider seat 18.

In addition, a forward extension line of a straight line L passing through the center axes of the attachment holes 35, 35 and the bolts 37, 38 obliquely intersects the lower end of the rider seat 18 in side view, and a rearward extension line of the straight line L obliquely intersects the upper surface of the carrier 19 in side view.

A pannier case 41 having a structure wherein a case body 39 in a box-like shape opening to an outer side is fitted with a cover member 40 for covering the outward opening portion thereof can be attached to a lateral side (in this embodiment, each of both left and right sides) of a rear portion of the body frame F. At that surface of the case body 39 of the pannier case 41 which is located on the body frame F side, a first pannier-side engaging part 42 and a second pannier-side engaging part 43 disposed under the first pannier-side engaging part 42 are provided.

The first pannier-side engaging part 42 is to be disengageably engaged, from above, with a hook 44 provided as a first vehicle body-side locking part on the body frame F in the vicinity of the seat rail 15, for bearing the weight of the pannier case 41 by the hook 44.' The hook 44 is detachably attached to an outer surface of the passenger grip base portion 32a of the passenger grip 32.

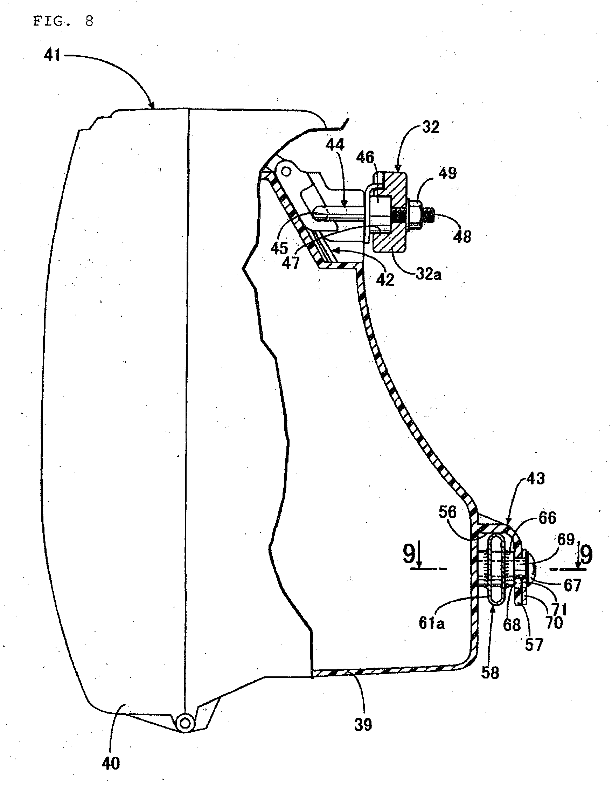

Referring to FIG. 8 as well, the hook 44 has a support member 46 secured to a locking member 45 formed by bending a bar material into a roughly U shape. A fitting recess 47 into which to fit the support member 46 is provided on the outer surface side of the passenger grip base portion 32a of the passenger grip 32. In addition, the support member 46 has, rooted therein, a pair of bolts 48 ... which penetrate the passenger grip base portion 32a. When nuts 49 ... making contact and engagement with the inner surface of the passenger grip base portion 32 are put into screw engagement with the bolts 48 ... and are tightened, the hook 44 is fixed to the passenger grip base portion 32a of the passenger grip 32. When the nuts 49 ... are untightened and detached, the hook 44 can be detached from the passenger grip base portion 32a.

Moreover, the passenger grip base portion 32a of the passenger grip 32 is attached to the seat rail 15 by the bolts 33, 34 at the two parts spaced from each other along the fore-and-aft direction, and the fitting recess 47 is provided in the passenger grip base portion 32a at a position between the bolts 33 and 34. Thus, the hook 44 is detachably attached to the passenger grip base portion 32a in the manner of being disposed between the parts at which the passenger grip base portion 32a is attached to the seat rail 15, namely, between the bolts 33 and 34.

A handle 50 is turnably attached to an upper portion of the case body 39, and the handle 50 is provided with a cylinder lock 51. In this case, the first pannier-side engaging part 42 being in engagement with the hook 44 can be disengaged from the hook 44 by inserting a proper key into the cylinder lock 51, then turning the key and thereafter raising the handle 50.

The second pannier-side locking part 43 is to be disengageably engaged with a second vehicle body-side locking part 52 extending rearward in a bar-like shape from a muffler stay or step holder 53 attached to the body frame F, for positioning the pannier case 41 in the vehicle width direction. The second vehicle body-side locking part 52 extends rearward from the step holder 53 provided with a pillion step 54 on which to put the foot of the pillion passenger seated on the rear seat 18b of the rider seat 18.

The second vehicle body-side locking part 52 has a structure wherein a rubber-made cap 60 is mounted to a rear end of a pipe 59 which is secured at its front end to the step holder 53 and extends rearward. Moreover, an intermediate portion of the second vehicle body-side locking part 52, namely, an intermediate portion of the pipe 59 is fixedly supported on the rear sub-frame 16 which supports the seat rail 15 and constitutes a part of the body frame F; specifically, the intermediate portion of the pipe 59 is fixed to a stay 55 provided on the rear sub-frame 16.

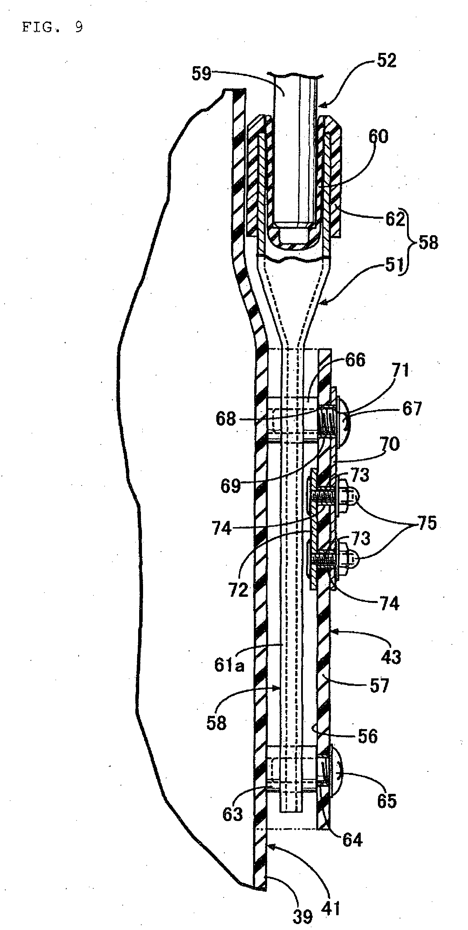

Referring to FIG. 9 also, the second pannier engaging part 43 includes: a hook portion 57 provided on the case body 39 of the pannier case 41 in such a manner as to form an engaging groove 56 (opening to the lower side) between itself and that surface of the case body 39 which is on the body frame F side; and an adapter 58 which is detachably attached to the hook portion 57 so as to be releasably fitted to the second vehicle body-side locking part 52.

The adapter 58 has a structure wherein a rubber-made tubular cover 62 is mounted to a front end of a pipe 61 which extends in the fore-and-aft direction while being provided at a portion thereof with a flat portion 61a to be inserted into and disposed in the engaging groove 56. A rear end portion of the second vehicle body-side locking part 52 is releasably fitted into a front end portion of the pipe 61.

A nut 63 having both ends projecting from both surfaces of a rear portion of the flat portion 61a so as to be inserted in the engaging groove 56 is secured to the rear portion of the flat portion 61a inside the engaging groove 56. When a screw member 65 passed through a hollow cylindrical collar 64 to be fitted into a rear portion of the hook portion 57 is screw engaged with the nut 63, the rear portion of the flat portion 61a is thereby detachably attached to the hook portion 57.

A nut 66 having both ends projecting from both surfaces of a front portion of the flat portion 61a so as to be inserted in the engaging groove 56 is secured to the front portion of the flat portion 61a inside the engaging groove 56. With a screw member 67 screw engaged with the nut 66, the front portion of the flat portion 61a is detachably attached to the hook portion 57.

Meanwhile, the adapter 58 is attached to the hook portion 57 in such a manner as to be vertically movable within a limited range on the side of the second vehicle body-side locking part 52. A rear end portion of the adapter 58, namely, a rear end portion of the flat portion 61a is attached to the hook portion 57 so as to be turnable about the axis of the collar 64. An intermediate portion of the adapter 58, namely, a front portion of the flat portion 61a is detachably attached to the hook portion 57 so as to be movable along a slot 68 which is provided in the hook portion 57 and is elongated in the vertical direction. Meanwhile, the screw member 67 is to be passed through a hollow cylindrical collar 69 set in contact with the nut 66, and the collar 69 is inserted in the slot 68.

In addition, a reinforcement plate 70 for reinforcing that part of an intermediate portion of the adapter 58 which is attached to the hook portion 57, in this embodiment, that part of a front portion of the flat portion 61a which is attached to the hook portion 57, is attached to the hook portion 57. The reinforcement plate 70 is to be attached to an outer surface side of the hook portion 57 while being provided with a slot 71 which corresponds to'the slot 58 and through which the collar 69 is to be passed. A pair of screw members 73, 73 secured at one-side end portions thereof to a contact plate 72 put into contact with an inner surface side of the hook portion 57 are passed through hollow cylindrical collars 74, 74 and the reinforcement plate 70 which are fitted into the hook portion 57. Cap nuts 75, 75 put into contact and engagement with the reinforcement plate 70 are screw engaged with those portions of the screw members 74, 74 which protrude from the reinforcement plate 70.

Now, operation of this embodiment will be described below. The carrier 19 disposed rearwardly of the rider seat 18 is detachably attached to the pair of left and right passenger grips 32 ... which are independent from each other. In the case where it is unnecessary to load luggage, therefore, the carrier 19 can be detached from the passenger grips 32 ... , which makes it possible to reduce the weight and frame rigidity of a vehicle rear portion, and to obtain appropriate driving stability. Besides, since the passenger grips 32 ... to be gripped by the pillion passenger are attached to the seat rails 15 ... , the pillion passenger can grip the passenger grips appropriately.

In addition, the pair of left and right passenger grips 32 ... include the passenger grip base portions 32a which extend in the fore-and-aft direction with their lower ends coinciding with the lower end of the rider seat 18 in side view and which are attached to the seat rails 15 ... , and the grip portions 32b ... which are provided in continuity with the passenger grip base portions 32a ... with their upper ends coinciding with the upper end of the rear seat 18b of the rider seat 18. This ensures that external appearance quality of the vehicle in side view can be enhanced, and the grip portions 32b ... can be set at an appropriate height for the pillion passenger to grip them.

Besides, since the upper surface of the carrier 19 is disposed on the rearward extension of the upper surface of the rear seat 18b of the rider seat 18, external appearance quality in side view can be enhanced, and luggage can be loaded not only on the carrier 19 but also in the manner of spanning the space between the carrier 19 and the rider seat 18. Particularly, since the upper ends of the grip portions 32b of the passenger grips 32 coincide with the upper end of the rider seat 18 in side view, the upper surface of the carrier 19 is disposed on the rearward extensions of the upper surface of the rider seat 18 and the upper ends of the grip portions 32b of the passenger grips 32, whereby external appearance quality in side view can be more enhanced.

In addition, the carrier 19 is provided with the two sets of attachment holes 35, 36 (one pair of left and right attachment holes 35 and one pair of left and right attachment holes 36) for attaching the carrier 19 to the passenger rails 32 ... , on the vehicle-width-directionally inner sides of the pair of left and right passenger grips 32 ... , with the attachment holes 35 and 36 on each side being disposed at two positions spaced from each other along the fore-and-aft direction, in such a manner that the forward extension line of the straight line L passing through the center axes of the attachment holes 35 and 36 obliquely intersects the lower end of the rider seat 18 in side view and the rearward extension line of the straight line L obliquely intersects the upper surface of the carrier 19 in side view. Therefore, the center of gravity of luggage loaded on the carrier 19 and each of those portions of the carrier 19 which are attached to the seat rails 15 ... can be interconnected at a minimum distance.

Besides, since the hooks 44 for engagement with the pannier cases 41 are detachably attached to the passenger grip base portions 32a ... of the passenger grips 32 ... , the grip portion 32b and the hook 44 are provided on the passenger grip 32 in the manner of being distributed respectively to the upper and lower sides. This makes it possible to avoid interference between the hand gripping the passenger grip 32 and the pannier case 41.

In addition, the passenger grip base portion 32a is attached to the seat rail 15 at the two positions spaced from each other along the fore-and-aft direction, and the hook 44 is disposed between the positions at which the passenger grip base portion 32a is attached to the seat rail 15. This makes it possible to avoid mutual interference between the structure for detachably attaching the hook 44 and the structure for attaching the passenger grip base portion 32a to the seat rail 15, and to contrive simplification of these structures.

Besides, the first pannier-side engaging part 42 for bearing the weight of each of the pannier cases 41, disposed respectively on both left and right sides of a rear portion of the body frame F, by being disengageably engaged with the hook portion 44 provided on the passenger grip 32 in the vicinity of the seat rail 15 constituting a part of the body frame F so as to support the rider seat 18, and the second pannier-side engaging part 43 for positioning the pannier case 41 in the vehicle width direction by being disengageably engaged with the second vehicle body-side locking part 52 provided on the body frame F side, are provided on that surface of the pannier case 41 which is on the body frame F side in such a manner that the second pannier-side engaging part 43 is disposed on the lower side of the first pannier-side engaging part 42. The second pannier-side engaging part 43 includes: the hook portion 57 provided on the pannier case 41 in such a manner as to form the engaging groove 56 (opening to the lower side) between itself and that surface of the pannier case 41 which is on the body frame F side; and the adapter 58 which is detachably attached to the hook portion 57 so as to be releasably fitted to the second vehicld body-side locking part 52 extending rearward from the step holder 53 attached to the body frame F. In the state wherein the adapter 58 has been detached, the pannier case 41 can be attached by engaging the hook portion 57 with the vehicle body-side stay. Thus, by utilizing the state wherein the adapter 58 has been detached and the state wherein the adapter 58 is attached to the hook portion 57, it is possible to cope with a plurality of attaching structures for vehicle use by changing the adapter 58 according to the vehicle. Accordingly, versatility can be enhanced.

In addition, the second vehicle body-side locking part 52 extends rearward from the step holder 53 provided with the pillion step 54 on which to put the foot of the pillion passenger seated on the rear seat 18b of the tandem type rider seat 18. As a result, the pannier case 41 is disposed rearwardly of the pillion step 54, so that the pannier case 41 would not constitute an obstacle against the pillion passenger's foot.

Besides, the second vehicle body-side-locking part 52 is fixedly supported on the rear sub-frame 16 constituting a part of the body frame F while supporting the seat rail 15. This makes it possible to restrain the pillion step 54 from being shaken when a load in the vehicle width direction is exerted on the pannier case 41, and to prevent an unpleasant feeling from being induced by such shaking.

In addition, the adapter 58 is attached to the hook portion 57 so as to be vertically movable within a limited range at an end portion on the side of the second vehicle body-side locking part 52. This ensures that in the state wherein the adapter 58 is fitted to the second vehicle body-side locking part 52, an operation of engaging the first pannier-side engaging part 42 with the hook portion 44 is easy to carry out.

Besides, a rear end portion of the adapter 58 is turnably attached to the hook portion 57, and an intermediate portion of the adapter 58 is attached to the hook portion 57 so as to be movable along the slot 58 which is provided in the hook portion 57 and is elongated in the vertical direction. Accordingly, a structure for permitting the adapter 58 to be vertically moved on the side of the second vehicle body-side locking part 52 can be configured easily.

In addition, since the reinforcement plate 70 for reinforcing that part at which an intermediate portion of the adapter 58 is attached to the hook portion 57 is attached to the hook portion 57, a deficiency in strength attendant on exertion of a great load on the tip side of the adapter 58 can be compensated for. Besides, since the reinforcement plate 70 is also provided with the vertically elongated slot 71 corresponding to the slot 58 in the hook portion 57, it is possible to effectively reinforce the part at which a load is exerted on the hook portion 57 by vertical movements of the adapter 58.

While an embodiment of the present invention has been described above, the invention is not to be restricted to the embodiment, and various design modifications are possible without departure from the scope of the present invention as defined in the claims.

### [Description of Reference Symbols]

- 15: Seat rail
- 18: Rider seat
- 19: Carrier
- 32: Passenger grip
- 32a: Passenger grip base portion
- 32b: Grip portion
- 35, 36: Attachment hole
- 41: Pannier case
- 44: Hook
- F: Body frame
- L: Straight line

## Claims

1. A saddle type vehicle comprising a pair of left and right seat rails (15) which constitute a part of a body frame (F) and on which a tandem type rider seat (18) is supported, a pair of passenger grips (32) which are attached to the left and right seat rails (15) on left and right sides to be gripped by a pillion passenger seated on a rear portion of the rider seat (18), and a carrier (19) disposed rearwardly of the rider seat (18) so as to load luggage thereon, the passenger grip (32) integrally has a passenger grip base portion (32a) which extends in the fore-and-aft direction and is attached to a rear portion of the seat rail (15), the carrier (19) is provided integrally with a pair of left and right attachment arm portions (19a) so that the attachment arm portions (19a) extend forward on the inner side of the passenger grip base portions (32a) of the passenger grips (32), the attachment arm portions (19a) are each provided with a pair of front and rear attachment holes (35, 36) at two positions spaced from each other along the fore-and-aft direction, the attachment arm portions (19a) are detachably attached to the passenger grip base portions (32a) of the pair of left and right passenger grips (32) by bolts (37, 38) passed through the attachment holes (35, 36), so that the carrier (19) connects left and right passenger grips(32).

2. The saddle type vehicle according to claim 1, wherein each of the pair of left and right passenger grips (32) includes the passenger grip base portion (32a) which extends in a fore-and-aft direction with its lower end coinciding with a lower end of the rider seat (18) in side view and which is attached to the seat rail (15), and the grip portion (32b) which is provided in continuity with the passenger grip base portion (32a) with its upper end coinciding with an upper end of the rider seat (18) in side view in such a manner as to be capable of being gripped by the pillion passenger.

3. The saddle type vehicle according to claim 1 or 2, wherein an upper surface of the carrier (19) is disposed on a rearward extension of an upper surface of the rider seat (18).

4. The saddle type vehicle according to any of claims 1 to 3, wherein the carrier (19) is provided with the attachment holes (35, 36) for attaching the carrier (19) to the passenger grips (32), the attachment holes (35, 36) being disposed on vehicle-width-directionally inner sides of the pair of left and right passenger grips (32), and the attachment holes (35, 36) on each side being located at two positions spaced from each other along the fore-and-aft direction, in such a manner that a forward extension line of a straight line (L) passing through center axes of the attachment holes (35, 36) on each side obliquely intersects a lower end of the rider seat (18) in side view and that a rearward extension line of the straight line (L) obliquely intersects an upper surface of the carrier (19) in side view.

5. The saddle type vehicle according to claim 2, wherein a hook (44) for engagement with a pannier case (41) is detachably attached to the passenger grip base portion (32a) of the passenger grip (32).

6. The saddle type vehicle according to claim 5, wherein the passenger grip base portion (32a) is attached to the seat rail (15) at two positions spaced from each other along the fore-and-aft direction, and the hook (44) is located between the positions at which the passenger grip base portion (32a) is attached to the seat rail (15).

## Patentansprüche

1. Satteltyp-Fahrzeug, umfassend ein Paar von linken und rechten Sitzstreben (15), welche einen Teil eines Körperrahmens (F) bilden und an welchen ein Tandemtyp-Fahrersitz (18) gestützt ist, ein Paar von Mitfahrergriffen (32), welche an den linken und rechten Sitzstreben (15) an linken und rechten Seiten derart angebracht sind, dass sie von einem Soziusmitfahrer gegriffen werden, welcher auf einem hinteren Bereich des Fahrersitzes (18) sitzt, und einen Träger (19), welcher rückwärtig von dem Fahrersitz (18) derart angeordnet ist, dass er Gepäck darauf trägt, wobei der Mitfahrergriff (32) einen Mitfahrergriff-Basisbereich (32a) aufweist, welcher sich in der Vorn-Hinten-Richtung erstreckt und welcher an einem hinteren Bereich der Sitzstrebe (15) angebracht ist, der Träger (19) integral mit einem Paar von linken und rechten Befestigungsarmbereichen (19a) derart versehen ist, dass sich die Befestigungsarmbereiche (19a) vorwärts an der inneren Seite der Mitfahrergriff-Basisbereiche (32a) der Mitfahrergriffe (32) erstrecken, die Befestigungsarmbereiche (19a) jeweils mit einem Paar von vorderen und hinteren Befestigungslöchern (35, 36) an zwei Stellen, welche beabstandet voneinander sind, entlang der Vorn-Hinten-Richtung versehen sind, die Befestigungsarmbereiche (19a) lösbar an den Mitfahrergriff-Basisbereichen (32a) des Paares von linken und rechten Mitfahrergriffen (32) durch Bolzen (37, 38), welche durch die Befestigungslöcher (35, 36) hindurchgehen, derart angebracht sind, dass der Träger (19) den linken und rechten Mitfahrergriff (32) verbindet.

2. Satteltyp-Fahrzeug nach Anspruch 1, wobei jeder des Paares von linken und rechten Mitfahrergriffen (32) den Mitfahrergriff-Basisbereich (32a), welcher sich in einer Vorn-Hinten-Richtung mit seinem unteren Ende übereinstimmend mit einem unteren Ende des Fahrersitzes (18) in Seitenansicht erstreckt und welcher an der Sitzstrebe (15) angebracht ist, und den Griffbereich (32b) enthält, welcher im Anschluss an den Mitfahrergriff-Basisbereich (32a) mit seinem oberen Ende übereinstimmend mit einem oberen Ende des Fahrersitzes (18) in Seitenansicht in einer solchen Art und Weise vorgesehen ist, dass er dazu geeignet ist, von dem Soziusmitfahrer gegriffen zu werden.

3. Satteltyp-Fahrzeug nach Anspruch 1 oder 2, wobei eine obere Oberfläche des Trägers (19) an einer rückwärtigen Verlängerung einer oberen Oberfläche des Fahrersitzes (18) angeordnet ist.

4. Satteltyp-Fahrzeug nach einem der Ansprüche 1 bis 3, wobei der Träger (19) mit den Befestigungslöchern (35, 36) zum Anbringen des Trägers (19) an den Mitfahrergriffen (32) versehen ist, wobei die Befestigungslöcher (35, 36) an in Fahrzeugbreitenrichtung gerichteten inneren Seiten des Paares von linken und rechten Mitfahrergriffen (32) angebracht sind und sich die Befestigungslöcher (35, 36) an jeder Seite an zwei Stellen, welche beabstandet voneinander sind, entlang der Vorn-Hinten-Richtung in einer solchen Art und Weise befinden, dass eine vorwärtige Verlängerungslinie einer geraden Linie (L), welche durch Mittelachsen der Befestigungslöcher (35, 36) an jeder Seite hindurch verläuft, ein unteres Ende des Fahrersitzes (18) in Seitenansicht schräg schneidet und dass eine rückwärtige Verlängerungslinie der geraden Linie (L) eine obere Oberfläche des Trägers (19) in Seitenansicht schräg schneidet.

5. Satteltyp-Fahrzeug nach Anspruch 2, wobei ein Haken (44) zum Eingriff mit einem Drahtkorbkasten (41) lösbar an dem Mitfahrergriff-Basisbereich (32a) des Mitfahrergriffs (32) angebracht ist.

6. Satteltyp-Fahrzeug nach Anspruch 5, wobei der Mitfahrergriff-Basisbereich (32a) an der Sitzstrebe (15) an zwei Stellen, welche beabstandet voneinander sind, entlang der Vorn-Hinten-Richtung angebracht ist und sich der Haken (44) zwischen den Stellen befindet, an welchen der Mitfahrergriff-Basisbereich (32a) an der Sitzstrebe (15) angebracht ist.

## Revendications

1. Véhicule de type à enfourcher comprenant une paire de glissières de selle gauche et droite (15) qui constituent une partie d'un cadre de caisse (F) et sur lesquelles une selle de conducteur de type tandem (18) est supportée, une paire de poignées passager (32) qui sont fixées aux glissières de selle gauche et droite (15) sur des côtés gauche et droit à saisir par un passager arrière assis sur une portion arrière de la selle conducteur (18), et un porte-bagages (19) disposé vers l'arrière de la selle conducteur (18) de façon à charger des bagages dessus, la poignée passager (32) comporte d'un seul tenant une portion de base de poignée passager (32a) qui s'étend dans la direction avant-arrière et est fixée à une portion arrière de la glissière de selle (15), le porte-bagages (19) est pourvu d'un seul tenant d'une paire de portions de bras de fixation gauche et droit (19a) de sorte que les portions de bras de fixation (19a) s'étendent vers l'avant sur le côté intérieur des portions de base de poignée passager (32a) des poignées passager (32), les portions de bras de fixation (19a) sont chacune pourvues d'une paire de trous de fixation avant et arrière (35, 36) à deux positions espacées l'une de l'autre le long de la direction avant-arrière, les portions de bras de fixation (9a) sont fixées amovibles aux portions de base de poignée passager (32a) de la paire de poignées passager gauche et droite (32) par des boulons (37, 38) passés à travers les trous de fixation (35, 36), de sorte que le porte-bagages (19) relie les poignées passager gauche et droite (32).

2. Véhicule de type à enfourcher selon la revendication 1, dans lequel chacune de la paire de poignées passager gauche et droite (32) comporte la portion de base de poignée passager (32a) qui s'étend dans une direction avant-arrière avec son extrémité inférieure coïncidant avec une extrémité inférieure de la selle conducteur (18) en vue de profil et qui est fixée à la glissière de selle (15), et la portion de poignée (32b) qui est pourvue en continuité de la portion de base de poignée passager (32a) avec son extrémité supérieure coïncidant avec une extrémité supérieure de la selle conducteur (18) en vue de profil de façon à être apte à être saisie par le passager arrière.

3. Véhicule de type à enfourcher selon la revendication 1 ou 2, dans lequel une surface supérieure du porte-bagages (19) est disposée sur une extension vers l'arrière d'une surface supérieure de la selle conducteur (18).

4. Véhicule de type à enfourcher selon l'une quelconque des revendications 1 à 3, dans lequel le porte-bagages (19) est pourvu des trous de fixation (35, 36) pour fixer le porte-bagages (19) aux poignées passager (32), les trous de fixation (35, 36) étant disposés sur des côtés intérieurs dans le sens de la largeur du véhicule de la paire de poignées passager gauche et droite (32), et les trous de fixation (35, 36) sur chaque côté étant situés à deux positions espacées l'une de l'autre le long de la direction avant-arrière, de manière à ce qu'une ligne d'extension vers l'avant d'une ligne droite (L) passant à travers des axes centraux des trous de fixation (35, 36) sur chaque côté coupe à l'oblique une extrémité inférieure de la selle conducteur (18) en vue de profil et à ce qu'une ligne d'extension vers l'arrière de la ligne droite (L) coupe à l'oblique une surface supérieure du porte-bagages (19) en vue de profil.

5. Véhicule de type à enfourcher selon la revendication 2, dans lequel un crochet (44) d'enclenchement avec une sacoche (41) est fixé amovible à la portion de base de poignée passager (32a) de la poignée passager (32).

6. Véhicule de type à enfourcher selon la revendication 5, dans lequel la portion de base de poignée passager (32a) est fixée à la glissière de selle (15) à deux positions espacées l'une de l'autre le long de la direction avant-arrière, et le crochet (44) est situé entre les positions auxquelles la portion de base de poignée passager (32a) est fixée à la glissière de selle (15).
